# EUROPEAN PATENT APPLICATION

(11) **EP 3 531 177 A1**
(43) Date of publication of application: **28.08.2019**
(21) Application number: 18157761.0
(22) Date of filing: 21.02.2018
(51) Int. Cl.: G02B 6/30, G02B 6/136

(54) **OPTICAL CHIP FOR COUPLING LIGHT AND FABRICATION METHOD**

(71) Applicant: Huawei Technologies Co., Ltd., Longgang District Shenzhen Guangdong 518129 (CN)
(72) Inventor: BROUCKAERT, Joost, 80992 Munich (DE); LAMPONI, Marco, 80992 Munich (DE)
(74) Representative: Roth, Sebastian

(57) **Abstract**

The present invention provides an optical chip (100) for coupling light between the optical chip and another optical device (500) and a manufacturing method for the optical chip. The optical chip comprises a substrate (101), a cladding (102) provided on the substrate, an optical facet (103) formed by a side wall of the cladding, wherein a side wall (104) of the substrate is made of a first section (105) adjacent to and in line with the optical facet and a second section (106) in line with or recessed from the optical facet. In this way the optical chip can efficiently couple light from the optical chip into another optical device. A method for fabricating an optical chip is also provided where the substrate is etched to form a side wall made of a first section in line with and adjacent to the optical facet. A portion of the substrate is removed from its backside to dice the wafer so that the optical chip has a second section in line with or recessed from the optical facet.

## Description

### TECHNICAL FIELD

The present invention relates to an optical chip for coupling light between the optical chip and another optical device. In particular, the optical chip is attachable to the other optical device, for instance an optical fiber or a fiber array unit (FAU) in an improved manner. To this end, the optical chip has an edge coupler structure. The present invention relates also to a method of fabricating the optical chip.

### BACKGROUND

To couple light between an optical fiber and an optical chip, for instance, a chip including a high index contrast silicon or silicon nitride waveguide, a dedicated coupling structure is needed, because of the difference in mode field diameter (MFD). A horizontal coupling structure implemented by an edge coupler typically offers a better performance (insertion loss, bandwidth, polarization dependence) than a vertical coupling structure implemented by a grating coupler. An edge coupler is mostly based on inverted waveguide tapers embedded in a silicon oxide top cladding.

A conventional edge coupler relies on polishing, in order to create a smooth vertical optical facet. Polishing is a one-die-at-a-time process that is very labor intensive, time-consuming and costly. In order to avoid polishing, approaches to create edge couplers with optical facets by means of dry etching followed by chip separation were reported. However, these approaches inherently lead to a part of the substrate at the bottom of the optical chip to stick out over the optical facet. As a consequence, a gap is created between the optical facet of the edge coupler and another optical device, for example, a fiber of FAU glued to the edge of the optical chip with the edge coupler, and will result in an insertion loss penalty.

In conclusion, the disadvantages of conventional edge couplers are the need for polishing and/or the gap created between the other optical device and the optical facet of the optical chip.

### SUMMARY

In view of the above-mentioned disadvantages, the present invention aims to improve the conventional optical chip, in particular its edge coupler, and its fabrication method. The present invention has the object to provide an optical chip with an edge coupler, wherein an optical facet of the optical chip can be coupled to another optical device without forming a gap. It should particularly be possible to bring the other optical device into close proximity with the optical facet of the optical chip, irrespective of the height of the other optical device. Further, the optical chip should be able to efficiently couple light from the optical chip into another optical device. Further, the fabrication of the optical chip should not require any polishing step.

The object of the present invention is achieved by the solution provided in the enclosed independent claims. Advantageous implementations of the present invention are further defined in the dependent claims.

In particular, the present invention proposes forming an edge coupler of an optical chip by etching a cladding of a wafer, in order to create a smooth optical facet, and then a combination of etching deep and vertically into a substrate of the wafer and dicing of the wafer, in order to obtain the optical chip.

A first aspect of the present invention provides an optical chip for coupling light between the optical chip and another optical device, the optical chip comprising a substrate, a cladding provided on the substrate, an optical facet formed by a side wall of the cladding wherein a side wall of the substrate is made of a first section adjacent to and in line with the optical facet and a second section in line with or recessed from the optical facet.

The optical facet and the substrate side wall of the optical chip may form an edge coupler for coupling light into and out of the optical chip. Advantageously, the optical chip does not have a part of the substrate that protrudes beyond the optical facet, i.e. sticks out over the optical facet. Accordingly, when the optical chip is coupled to another optical device, like a fiber or FAU, no gap is created between said optical device and the optical facet. The other optical device can be glued to the optical chip, thereby creating an optically efficient and mechanically stable coupling between the optical chip and the optical device. The other optical device can particularly be brought into close proximity with the optical facet, irrespective of the height of the other optical device.

In an implementation form of the first aspect, the complete substrate side wall is in line with the optical facet.

This implementation form is achieved according to the invention without any polishing step. Nevertheless, no gap is created when the optical chip is coupled to another optical device. The substrate side wall has a different physical surface structure than a polished side wall would have, which is a fingerprint of the fabrication method of the optical chip.

In a further implementation form of the first aspect, the optical chip has a thickness of 100-500 µm, in particular of 250-350 µm.

The above-described thickness is a fingerprint of the fabrication method of the optical chip, which does not require polishing. An optical chip obtained with a conventional fabrication method including polishing is much thicker.

In a further implementation form of the first aspect, the second section of the substrate side wall is recessed by 0-100 µm, in particular by 0-50 µm, from the optical facet.

The recess of the second substrate side wall section is a fingerprint of the fabrication method of the optical chip, which does not require polishing. Due to the recess, no gap is formed between the optical facet and another optical device, while a stable attachment of the other optical device to the optical chip can be formed, for example, by filling the space created by the recess with glue. The recess also makes the fabrication method of the optical chip resistant against process variations.

In a further implementation form of the first aspect, the optical chip has a thickness of 600-800 µm, and/or the first section of the substrate side wall has a height of 100-500 µm, for instance of 250-350 µm.

The above-described thickness is another fingerprint of the fabrication method of the optical chip, which does not require polishing.

A second aspect of the present invention provides an optical chip for coupling light between the optical chip and another optical device, wherein the optical chip is obtained by a method according to a third aspect of the present invention or any of its implementation forms.

The optical chip of the second aspect is accordingly obtained without any polishing step. Nevertheless, the resulting optical chip has an optical facet and a substrate side wall structure that does not lead to the formation of a gap, when the chip is attached to another optical device. The fabrication method leaves clear fingerprints in the optical chip, e.g. in the physical surface structure of the side wall, which is different than for a side wall obtained by polishing, or the thickness of the optical chip, or a recess of the substrate from the optical facet.

The third aspect of the present invention provides a method for fabricating an optical chip for coupling light between the optical chip and another optical device, the method comprising providing a wafer including a substrate and a cladding provided on the substrate, etching the cladding to form an optical facet on at least one side wall of the etched cladding, etching the substrate to form at least one substrate side wall made of a first section in line with and adjacent to the optical facet, and removing a least a portion of the substrate from its backside to dice the wafer so that the optical chip has a second section in line with or recessed from the optical facet, wherein the backside of the wafer is a side of the wafer opposite to the cladding.

In this document 'dicing' a wafer refers to separating the wafer into individual chips. For instance, as detailed below, dicing of a wafer can be implemented by directly blade dicing the substrate from the wafer backside. Alternatively, as also detailed below, dicing of a wafer can also be implemented by etching through the wafer from its front side, after having thinned the substrate from the backside of the wafer, or also by thinning a wafer with an already etched substrate from its backside.

The method of the third aspect enables the fabrication of an optical chip, for instance, as described above with respect to the first aspect, without requiring a polishing step. The optical chip will have an optical facet that can be coupled to another optical device without any gap forming in between. The fabrication method is further relatively simple, and is robust against process variations. Thus, the fabrication method leads to an improved yield and a highly-efficient edge coupler of the optical chip.

In an implementation form of the third aspect, the cladding and the substrate are etched in a single lithography step and/or the etched cladding is used as a mask for etching the substrate.

By using the etched cladding as a mask, a single lithography step is easily possible for both etch processes. A single lithography step results in a smooth, step-free transition between the optical facet and the first substrate side wall section.

In a further implementation form of the third aspect, the substrate is etched by etching a trench with a depth of 100-500 µm, in particular of 250-350 µm, and in particular with a width of 10-40 µm.

This etch depth can be obtained with a high etch quality, particularly leading to a smooth optical facet and first side wall section. Further, the etch depth allows easily separating the wafer into optical chips in a next fabrication step.

In a further implementation form of the third aspect, after etching the substrate, the method further comprises blade dicing the wafer from its backside to form at least one optical chip having an optical facet and a substrate side wall with a second section recessed from the optical facet.

Accordingly, the dicing of the wafer is implemented by blade dicing. Because the blade dicing is done from the backside of the wafer, the dicing groove can be aligned to create the recessed second substrate side wall section. The blade dice does may be configured not to cut through the entire substrate, but for instance to stop once the bottom of the substrate etch is reached. The width of the blade may have a larger width than the etch width into the substrate, so that the recessed second section of the substrate side wall is formed. The larger width of the blade allows for compensating alignment tolerances between the blade dice and the substrate etch, and thus leads to a higher overall yield.

In a further implementation form of the third aspect, the wafer is diced such that the second section of the substrate side wall is recessed by 0-100 µm, in particular by 0-50 µm, from the optical facet.

The above-given values lead to an optical chip that allows an efficient and gapless coupling of its optical facet to another optical device.

In a further implementation form of the third aspect, before etching the cladding and the substrate, the method further comprises thinning the wafer from its backside, and the etching of the substrate includes etching through the whole thinned wafer to form at least one optical chip having an optical facet and a substrate side wall completely in line with the optical facet.

Accordingly, the dicing of the wafer is implemented by thinning and then etching. Thinning from the backside may be carried out by grinding. This implementation form provides an alternative solution to the dicing by blade dicing, and leads likewise to an optical chip that can couple efficiently and gapless to another optical device.

In another implementation form of the third aspect, after etching the cladding and before etching the substrate, the method further comprises thinning the wafer from its backside, and the etching of the substrate includes etching through the whole thinned wafer to form at least one optical chip having an optical facet and a substrate side wall completely in line with the optical facet.

In a further implementation form of the third aspect, the method further comprises after etching the cladding and the substrate, thinning the wafer from its backside so as to dice the wafer and form at least one optical chip having an optical facet and a substrate side wall completely in line with the optical facet.

Accordingly, the dicing of the wafer is implemented by etching and then thinning. The thinning from the backside may again be carried out by grinding. This implementation form provides another alternative solution to the dicing by blade dicing, and leads likewise to an optical chip that can couple efficiently and gapless to another optical device.

In a further implementation form of the third aspect, the wafer is thinned to a thickness of 100-500 µm, for instance of 250-350 µm.

This allows dicing the wafer by the subsequent etching step. The result is a smooth surface of the optical facet and the substrate side wall, i.e. a high etch quality.

In a further implementation form of the third aspect, the method further comprises attaching another optical device, for instance an optical fiber or fiber array unit, to at least the optical facet and the first section of the substrate side wall of the optical chip.

The other optical device may for instance be glued to the optical facet and substrate side wall. Thereby, an efficient coupling between the devices is created without any gap.

In a further implementation form of the third aspect, the cladding on the substrate includes or is provided with a tapered section, and the tapered section is etched as to taper towards the optical facet.

Thereby, the mode size of light that is carried through the optical chip in the cladding can be increased, in order to match it with the mode size of another optical device coupled to the optical facet. Accordingly, efficient edge coupling is achieved.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms will be explained in the following description of specific embodiments in relation to the enclosed drawings, in which
- FIG. 1: shows optical chips according to several embodiments.
- FIG. 2: shows a method according to an embodiment.
- FIG. 3: shows steps of a method according to an embodiment.
- FIG. 4: shows a step of a method according to an embodiment.
- FIG. 5: shows a step of a method according to an embodiment.
- FIG. 6: shows a step of a method according to an embodiment.
- FIG. 7: shows a step of a method according to an embodiment.
- FIG. 8: shows steps of a method according to an embodiment.
- FIG. 9: shows steps of a method according to an embodiment.

### DETAILED DESCRIPTION OF EMBODIMENTS

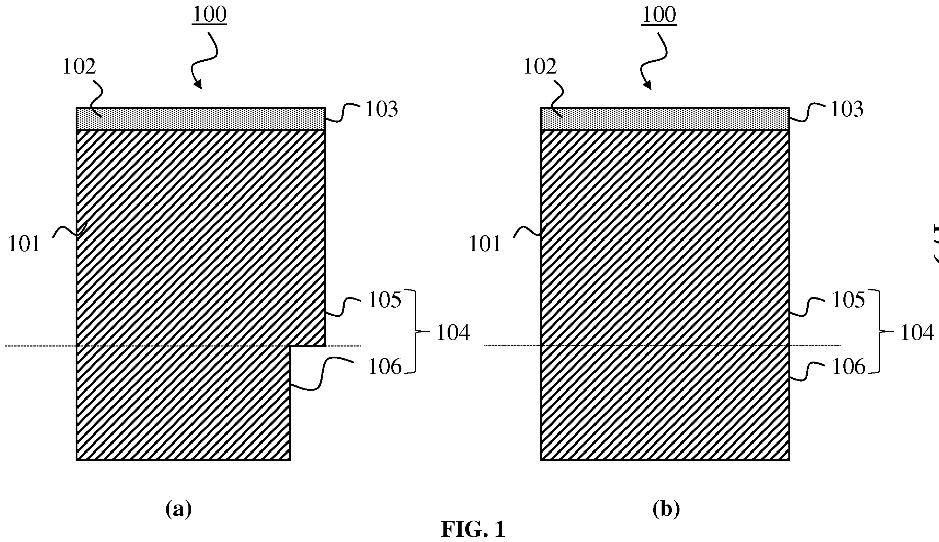

FIG. 1 shows in (a) and (b) two optical chips 100 according to different embodiments of the present invention. Both optical chips 100 are designed to couple light between the optical chip 100 and another optical device. To this end, the optical chips 100 are provided with an edge coupler, and as a consequence both optical chips 100 comprise a substrate 101, a cladding 102 provided on the substrate 101, an optical facet 103 formed by a side wall of the cladding 102, and a side wall 104 of the substrate 101.

The cladding 102 functions as a waveguide, in which light can be transported through the optical chip 100, for instance, from and to photonic elements or functions provided by the optical chip 100. The optical facet 103 is configured to couple light out of or into the optical chip 100, and may thus be coupled with the other optical device, e.g. with a fiber or FAU.

The optical chips 100 shown in FIG. 1 differ with respect to the substrate side wall 104. The optical chip 100 shown in FIG. 1(a) has a side wall 104 of the substrate 101 that is made of a first section 105, which is adjacent to and in line with the optical facet 103, and of a second section 106, which is recessed from (with respect to) the optical facet 103. The optical chip 100 shown in FIG. 1(b) has a side wall 104 of the substrate 101 that is made of a first section 105, which is adjacent to and in line with the optical facet 103, and of a second section 106, which is in line with the optical facet 103. That is, the complete substrate side wall 104 is in line with the optical facet 103. The substrate side walls 104 of both optical chips 100 are designed such that the respective optical chip 100 can efficiently couple to the other optical device without a gap being formed between the other optical device and the optical facet 103 of the chip 100.

The optical chips 100 of FIG. 1 may particularly have a dry etched (e.g. RIE) optical facet 103. This avoids expensive and labor intensive polishing. Further, the optical chips 100 may have a first substrate side wall section 105 fabricated by using a Deep Reactive Ion Etching (DRIE) process. For instance, a so-called Bosch process can be used to obtain a (almost) vertical side wall section 105. If a single lithography step is used to create the optical facet 103 and the first substrate side wall section 105, the optical chips 100 have a step-free transition between the optical facet 103 and said section 105. The optical chips 100 both have no part that protrudes beyond the optical facet 103, thus allowing gapless coupling. The depth of the first side wall section 105 is for both optical chips 100 deeper than for a conventional chip, thus supporting a uniform glue line between the optical chip 100 and another optical device over most of the chip thickness, and consequently a more reliable attachment.

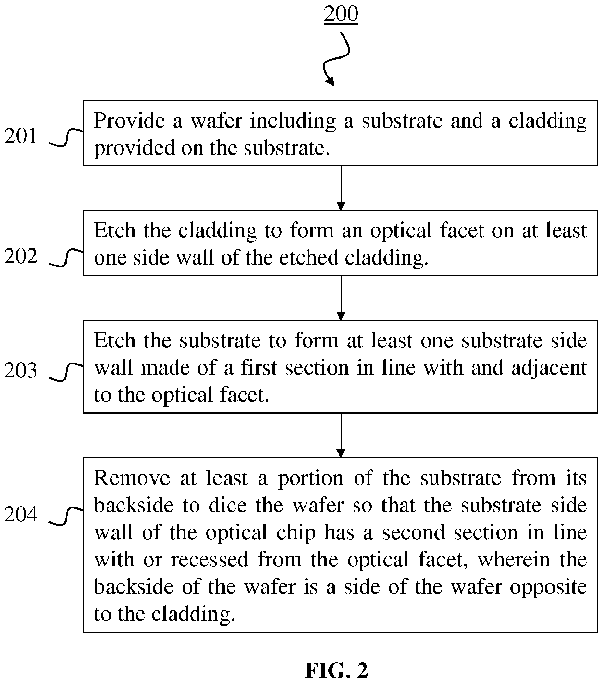

FIG. 2 shows a method 200 according to an embodiment of the present invention. In particular, the method 200 is for fabricating an optical chip 100 - for instance, the optical chips 100 shown in FIG. 1.

The method 200 comprises a step 201 of providing a wafer that includes a substrate 101 and a cladding 102 provided on the substrate 101, and a step 202 of etching the cladding 102 to form an optical facet 103 on at least one side wall of the etched cladding 102. Further, the method 200 includes a step 203 of etching the substrate 101 to form at least one substrate side wall 104, which is made of a first section 105 in line with and adjacent to the optical facet 103, and a step 204 of removing a least a portion of the substrate 101 from its backside 400 to dice the wafer so that the substrate side wall 104 of the optical chip 100 has a second section 106, which is in line with or recessed from the optical facet 103, wherein the backside 400 of the wafer is a side of the wafer opposite to the cladding 102. Notably, the steps 201-204 are not limited to a specific order, and particularly the substrate removing step 204 can be carried out before the cladding etching step 202 and the substrate etching step 203.

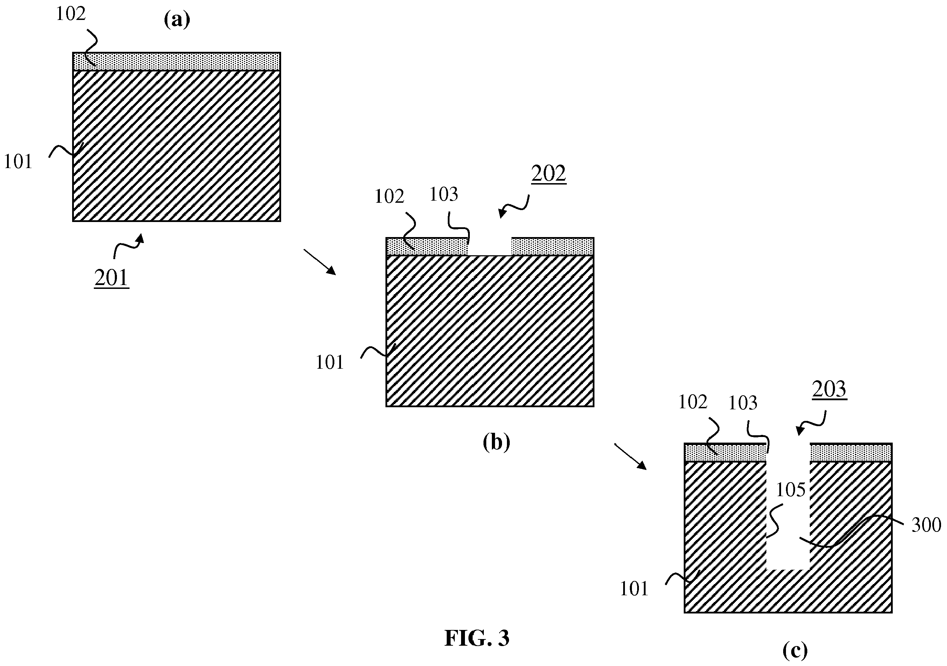

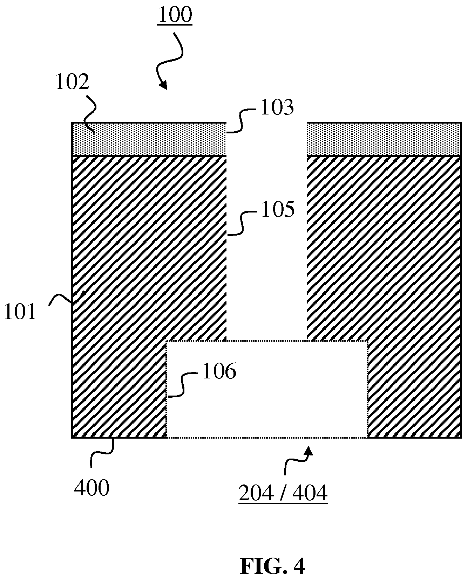

FIG. 3 and FIG. 4 show a detailed method 200 according to an embodiment of the present invention, which builds on the method 200 shown in FIG. 2 and is illustrated with respect to an optical chip 100 (and its preliminary structures) according to an embodiment of the invention, which builds on the optical chip 100 shown in FIG. 1(a). Same elements and steps in FIG. 3 and 4 and in FIG. 1 and 2 have the same reference signs and function likewise.

FIG. 3(a) shows that in a first method step 201 a wafer is provided, which includes a substrate 101 and a cladding 102 provided on the substrate 101. For instance, the starting material may be a silicon wafer containing photonic chips based on silicon or silicon nitride waveguides. Inverted tapers may be used in the top cladding 102, in order to increase the mode size to match it with the mode size of another optical device, like an optical fiber, in use of the final optical chip 100. The light will be mainly confined in the cladding layer 102, which is due to the refractive indices of the cladding layer 102, the substrate 101, and air, respectively.

FIG. 3(b) shows a next method step 202, in which an optical facet 103 is formed by etching the cladding 102. In particular, the optical facet 103 is created on at least one side wall of the etched cladding 102. It is possible to create, with one etching step 202, two or more optical facets 103 of different (final) optical chips 100. For example, the optical facet 103 may be created in the silicon oxide top cladding layer 102 using a dry etch process (reactive ion etching).

FIG. 3(c) shows a third method step 203, in which the substrate 101 is etched to form at least one substrate side wall 104 (not shown in Fig. 3(c)), which has a first section 105 in line with and adjacent to the optical facet 103. For instance, a deep trench 300 (with a depth of 100-500 µm, in particular of 250-350 µm, and in particular with a width of 10-40 µm) may be etched into the substrate 101 by using e.g. a DRIE process. This deep trench 300 can be perfectly aligned to the optical facet 103, in particular when a single lithography step is used for the etching step 202 and the etching step 203. Thereby, the etched cladding 102 may act as a mask in the etching step 203.

FIG. 4 shows that in a fourth method step 204, a portion of the substrate 101 (dotted box) may be removed from the wafer backside 400 by blade dicing 404, in order to dice the wafer so that at least one optical chip 100 is created. This optical chip 100 has a second section 106 of the substrate side wall 104, which is recessed from the optical facet 103. The blade dicing from the backside 400 of the wafer may be aligned to the deep trench 300. In an advantageous configuration, the blade dicing does not happen over the entire chip thickness, but stops when the bottom of the trench 300 is reached. The width of the blade may be larger than the width of the trench 300 (e.g. 73 um wide blade and 20 um wide trench 300). This results in a recessed second side wall section 106 at the bottom of the optical chip 106.

The recess allows for alignment tolerances between the blade dice and the trench 300. If a straight substrate side wall 104 was targeted (e.g. by aligning the edge of the trench 300 with the edge created by the blade dice process), there would be cases in which the resulting second substrate side wall section 106 has a protrusion at the bottom, due to process variations. However, no part of the substrate should protrude, in order to not induce optical coupling loss. For example, assuming an alignment accuracy of +/- 10um, a small recess of 0-20 µm may be obtained for the optical chip 100. In a possible implementation a height of the recess may be up to 50% of a total thickness of the optical chip 100. This allows to have a thin and uniform glue line between the optical chip 100 and another optical device over most part of the chip thickness, i.e. along the first section 105 of the side wall 104. A height of the recess is a dimension of the recess along the direction of the thickness of the chip 100.

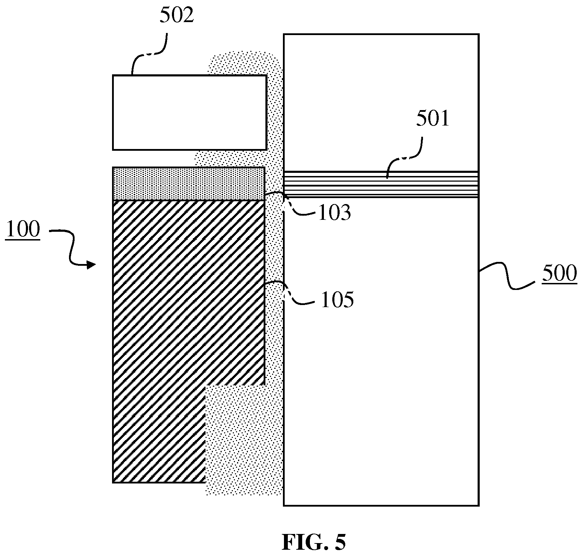

FIG. 5 shows a further method step of attaching the optical chip 100, which results after the step 204/604 shown in FIG. 4, to another optical device 500. Here the other optical device 500 is exemplarily a FAU. The FAU 500 may be attached (e.g. glued, indicated by dots in FIG. 5) to the edge coupler of the optical chip 100, particularly to at least the optical facet 103 and the first substrate side wall section 105. Due to the vertical deep trench 300 and the recessed second substrate side wall section 106, which is created by the blade dicing, the optical device 500 can be brought into close contact with the optical facet 103. The optical facet 103 can then efficiently couple with, for instance, one or more V-grooves 501 in the FAU. That is, low insertion loss is achieved without the need for polishing.

Optionally, as shown in FIG. 5, an additional mounting block 502 may be used, and may be glued to the FAU 500 and the cladding 102 of the optical chip 100, respectively, for mechanical purposes e.g. to support a stable attachment of the FAU 500 to the optical chip 100. The additional mounting block 502 may be a glass block.

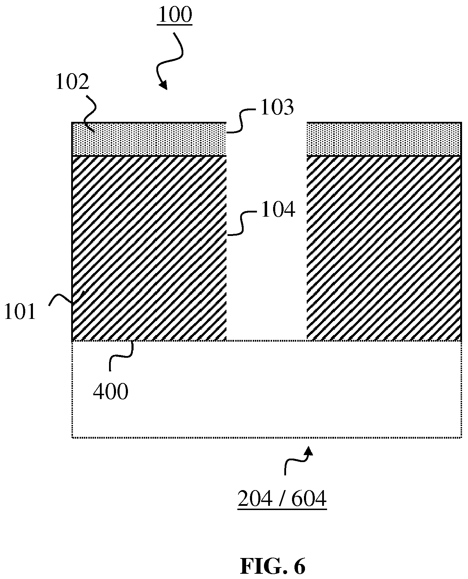

FIG. 6 shows a step of a method 200 according to an embodiment of the present invention, which builds on the method 200 shown in FIG. 2 and is illustrated with respect to an optical chip 100 (and its preliminary structures) according to an embodiment of the invention, which builds on the optical chip 100 shown in FIG. 1(b). Same elements and steps in FIG. 6 and in FIG. 1 and 2 have the same reference signs and function likewise.

FIG. 6 shows particularly another possibility of the fourth method step 204, which follows the etching step 203 shown in FIG. 3. This method step 204 particularly includes a step of thinning 604 the wafer from its backside 400 so as to dice the wafer and to form the at least one optical chip 100. In particular, the at least one chip 100 may be separated by removing the bottom (dotted box) of the substrate 101 (of the wafer) by backside grinding. This results in an optical chip 100 having an optical facet 103, and a substrate side wall 104 completely in line with the optical facet 103.

The resulting optical chip 100 is notably much thinner than the starting material. For instance, typical silicon wafers are 700 µm thick. With an etched silicon trench 300 having a depth of 100-500 µm, around 200-600 µm of substrate material needs to be removed from the backside, in order to create separation (dicing of the wafer). The substrate side wall 104 of the optical chip 100 that is obtained using this approach does not have a recess or protrusion at the bottom. Also in this case, another optical device 500, like an optical fiber or FAU, can be brought into close contact with the optical facet 103 of the optical chip 100.

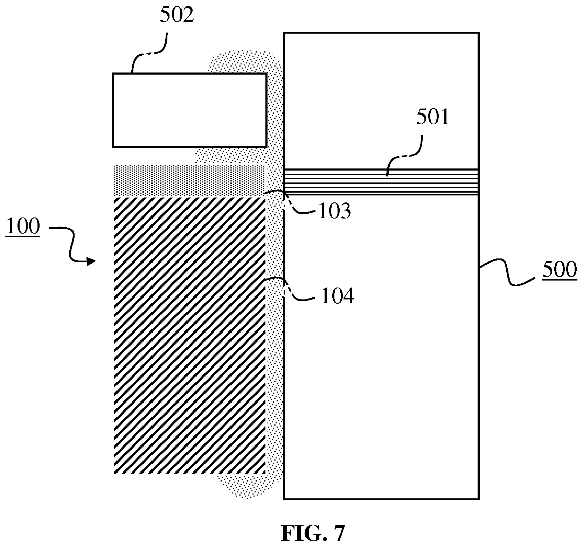

FIG. 7 shows this in a similar manner than shown in FIG. 5. The optical chip 100 with the complete substrate side wall 104 in line with the optical facet 103 can be attached (e.g. glued, indicated by dots in FIG. 7) to the FAU 500, in order to form an efficient and gapless coupling with, for example, one or more V-grooves 501 of the FAU.

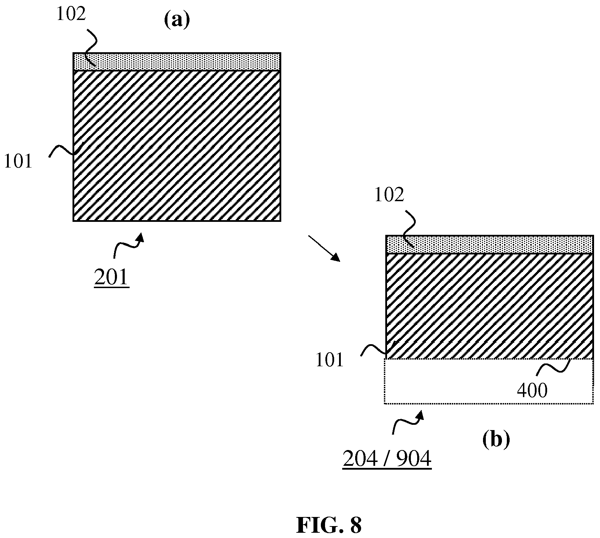

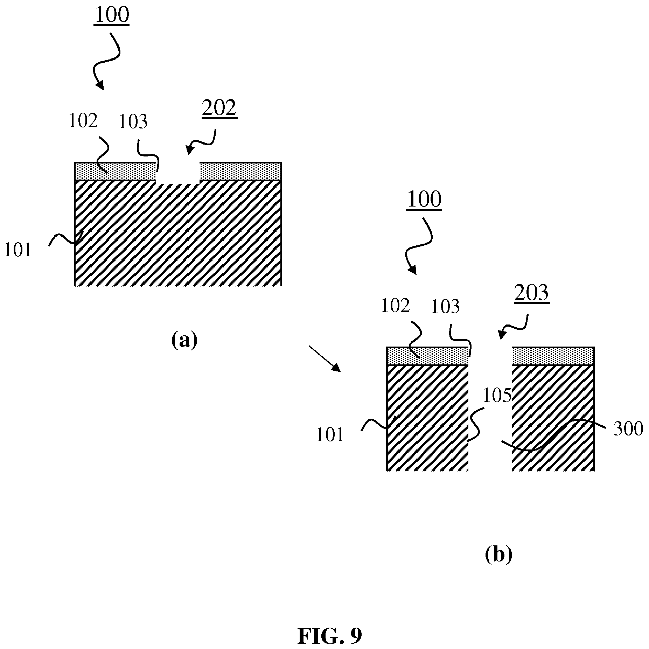

FIG. 8 and FIG. 9 show another detailed method 200 according to an embodiment of the present invention, which builds on the method 200 shown in FIG. 2 and is illustrated with respect to an optical chip 100 (and its preliminary structures) according to an embodiment of the invention, which builds on the optical chip 100 shown in FIG. 1(b). Same elements and steps in FIG. 8 and 9 and in FIG. 1 and 2 have the same reference signs and function likewise. In particular, compared to the method 200 shown in FIG. 3 and 4, the etching steps 202 and 203 are carried out after the substrate removing step 204.

In particular, the method 200 shows in FIG. 8(a) the step 201 of providing the wafer with the cladding 102 on top of the substrate 101, and shows in FIG. 8(b) the step 204 of removing a portion of the substrate 101 by thinning 904 the wafer from its backside 400. The step 204 is carried out before the step 202 of etching the cladding 102 shown in FIG. 9(a), and before the step 203 of etching the substrate 101 shown in FIG. 9(b). However, it is also possible to carry out the step 204 between these etching steps 202 and 203.

In order to dice the wafer, the etching 202 of the cladding 102 and the etching 203 of the substrate 101 comprises etching - for instance in one lithography step - through the whole thinned wafer, in to form at least one optical chip 100 as shown in FIG. 9(a) and (b). The optical chip 100 has an optical facet 103 at a cladding side wall and has a substrate side wall 104 completely in line with the optical facet 103.

In summary, the embodiments of the present invention describe a structure of an optical chip 100 and a fabrication method 200 of that optical chip 100 that allows attaching another optical device 500 at the edge of the optical chip 100, without having a gap between the optical facet 103 and the optical device 1500. The method 200 does furthermore not require polishing.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Optical chip (100) for coupling light between the optical chip (100) and another optical device, the optical chip (100) comprising
a substrate (101),
a cladding (102) provided on the substrate (101),
an optical facet (103) formed by a side wall of the cladding (102), wherein
a side wall (104) of the substrate (101) is made of a first section (105) adjacent to and in line with the optical facet (103) and a second section (106) in line with or recessed from the optical facet (103).

2. Optical chip (100) according to claim 1, wherein
the complete substrate side wall (104) is in line with the optical facet (103).

3. Optical chip (100) according to claim 2, wherein
the optical chip (100) has a thickness of 100-500 µm, in particular of 250-350 µm.

4. Optical chip (100) according to claim 1, wherein
the second section (106) of the substrate side wall (104) is recessed by 0-100 µm, in particular by 0-50 µm, from the optical facet (103).

5. Optical chip (100) according to claim 4, wherein
the optical chip (100) has a thickness of 600-800 µm, and/or
the first section (105) of the substrate side wall (104) has a height of 100-500 µm, preferably of 250-350 µm.

6. Optical chip (100) for coupling light between the optical chip (100) and another optical device, wherein the optical chip (100) is obtained by a method (200) according to any one of the claims 7 to 15.

7. Method (200) for fabricating an optical chip (100) for coupling light between the optical chip (100) and another optical device, the method (200) comprising
providing (201) a wafer including a substrate (101) and a cladding (102) provided on the substrate (101),
etching (202) the cladding (102) to form an optical facet (103) on at least one side wall of the etched cladding (102),
etching (203) the substrate (101) to form at least one substrate side wall (104) made of a first section (105) in line with and adjacent to the optical facet (103), and
removing (204) a least a portion of the substrate (101) from its backside (400) to dice the wafer so that the substrate side wall (104) of the optical chip (100) has a second section (106) in line with or recessed from the optical facet (103), wherein the backside (400) of the wafer is a side of the wafer opposite to the cladding (102).

8. Method (200) according to claim 7, wherein
the cladding (102) and the substrate (101) are etched (202, 203) in a single lithography step and/or
the etched cladding (102) is used as a mask for etching (203) the substrate (101).

9. Method (200) according to claim 7 or 8, wherein
the substrate (101) is etched (203) by etching a trench (300) with a depth of 100-500 µm, in particular of 250-350 µm, and in particular with a width of 10-40 µm.

10. Method (200) according to one of the claims 7 to 9, wherein after etching (203) the substrate (101), the method (200) further comprises
blade dicing (204, 404) the wafer from its backside (400) to form at least one optical chip (100) having an optical facet (103) and a substrate side wall (104) with a second section (106) recessed from the optical facet (103).

11. Method (200) according to claim 10, wherein
the wafer is diced (204, 404) such that the second section (106) of the substrate side wall (104) is recessed by 0-100 µm, in particular by 0-50 µm, from the optical facet (103).

12. Method (200) according to one of the claims 7 to 9, wherein before etching (202, 203) the cladding (102) and the substrate (101), the method (200) further comprises
thinning (204, 904) the wafer from its backside (400), and wherein
the etching (203) of the substrate (101) includes etching through the whole thinned wafer to form at least one optical chip (100) having an optical facet (103) and a substrate side wall (104) completely in line with the optical facet (103).

13. Method (200) according to one of the claims 7 to 9, wherein the method (200) further comprises after etching (202, 203) the cladding (102) and the substrate (101),
thinning (204, 604) the wafer from its backside (400) so as to dice the wafer and form at least one optical chip (100) having an optical facet (103) and a substrate side wall (104) completely in line with the optical facet (103).

14. Method (200) according to claim 12 or 13, wherein
the wafer is thinned (204, 604) to a thickness of 100-500 µm, preferably of 250-350 µm.

15. Method (200) according to one of the claims 10 to 14, further comprising
attaching another optical device (500), preferably an optical fiber or fiber array unit, to at least the optical facet (103) and the first section (105) of the substrate side wall (104) of the optical chip (100).

16. Method (200) according to one of the claim 7 to 15, wherein
the cladding (102) on the substrate (101) includes or is provided with a tapered section, and
the tapered section is etched (202) as to taper towards the optical facet (103).
